# FASCICULE DE BREVET EUROPEEN

(11) **EP 1 424 186 B1**
(45) Date de publication et mention de la délivrance du brevet: **17.05.2006**
(21) Numéro de dépôt: 03075788.4
(22) Date de dépôt: 18.03.2003
(51) Int. Cl.: B29C 47/04, B29C 47/06

(54) **Procédé de fabrication par coextrusion d'emballages plastiques absorbants avec couche barrière et emballages ainsi obtenus**
Herstellungsverfahren mittels Co-Extrusion eines absorbierenden Verpackungsmaterials aus Kunststoff, und das hergestellte Verpackungsmaterial
Method of manufacturing an absorbent plastic packaging material with a barrier layer by coextrusion, and the manufactured packaging material

(30) Priorité: 28.11.2002 FR 0214976
(43) Date de publication de la demande: 02.06.2004
(73) Titulaire: Huhtamaki France S.A., 28700 Auneau (FR)
(72) Inventeur: Daviller, Jean-Marie, 28700 Levainville (FR)
(74) Mandataire: Debay, Yves

(56) Documents cités:
- EP-A- 0 874 034
- EP-A- 1 075 921
- DE-A- 19 544 858
- US-A- 5 116 881
- US-A- 5 354 402

## Description

La présente invention concerne le domaine des emballages en plastique pour les denrées alimentaires. L'invention concerne plus particulièrement un procédé de fabrication par coextrusion d'emballages plastiques absorbants ou non absorbants avec couche barrière et les emballages ainsi obtenus.

Il est connu dans l'art antérieur, par la demande de brevet FR 2 041 489, un procédé de fabrication en continu de récipients en matières thermoplastiques expansées avec extrusion et expansion de la matière tout en refroidissant une partie du produit extrudé, de manière à fermer des cellules du polymère en expansion. Ce procédé permet de produire des récipients expansés, munis d'une peau sur une ou les deux faces. Toutefois, les récipients obtenus par ce procédé n'offrent pas de propriétés de barrière pour l'exposition et la conservation de denrées alimentaires sur une longue durée.

Dans le cas de la viande préemballée, la stabilité de la couleur de celle-ci est le facteur de qualité le plus important qui contribue à sa durée de vie. Le consommateur associe la couleur rouge vif de l'oxymyoglobine à une qualité satisfaisante de viande. Aussi, les emballages doivent présenter des propriétés et caractéristiques répondant aux exigences de conservation de l'aliment (oxydation de certains composés de l'aliment, brunissement et dégradation enzymatique, brunissement non enzymatique et altérations biologiques), aux exigences des traitements de stabilisation utilisés et aux exigences de présentation dans les rayonnages. De plus, il faut obligatoirement tenir compte des conditions d'entreposage et de manipulations ultérieures que subira l'aliment.

Il est connu également des barquettes d'emballage avec une couche de matériau présentant des propriétés de barrière à l'eau et au gaz. Les polymères PET, PETG, PMMA, PA, EVOH, PVC, les résines ionomères sont autant d'exemples de matériaux ayant cet effet de barrière. Il est connu l'utilisation en multicouche du copolymère éthylène/alcool vinylique EVOH. La demande de brevet FR 01 09024 par le même déposant, qui concerne une structure multicouche présentant des propriétés antistatiques et son procédé de fabrication, en est un exemple et est ici citée comme référence.

Il est connu des barquettes (PS/EVOH/PE), destinées à la conservation de denrées alimentaires, mises sous vide puis réinjectées sous 100% de C0₂ ou d'un gaz/mélange de gaz neutre à la pression atmosphérique et recouvertes d'un film EVOH/PE imperméable à l'oxygène à 1 cm³/m²/24h. Un absorbeur d'oxygène peut être ajouté au préalable dans ces barquettes. L'objectif essentiel de ces différentes barquettes de l'art antérieur est d'assurer la conservation des aliments stockés pendant une durée plus importante. Toutefois, ces barquettes de l'art antérieur avec couche barrière à l'oxygène ne sont pas obtenues par coextrusion mais par contre-collage d'un film en surface ou par laminage. Les procédés employés de l'art antérieur n'intègrent pas de film barrière dans la production en ligne de l'emballage et nécessitent donc des étapes supplémentaires distinctes qui engendrent un surcoût. En outre, contrairement à un procédé par coextrusion dans lequel le film barrière est placé à l'intérieur, une couche barrière disposée en surface est forcément exposée à l'humidité. Hors, les matériaux employés comme barrière aux gaz sont généralement hydrosolubles et peuvent perdre leurs propriétés de barrière. De plus, ces barquettes de l'art antérieur, ne présentant pas de propriétés d'absorption des jus ou liquides, ne peuvent pas garantir une bonne présentation des denrées alimentaires telles que la viande rouge par exemple.

Il est connu dans l'art antérieur, par la demande de brevet PCT WO 00/46125 des barquettes absorbantes en polystyrène avec une couche barrière de fluides destinées au conditionnement de viande fraîche ou de volaille. La fabrication de telles barquettes exige une opération de plaxage sur chaque côté de la double feuille pour lier les couches externes aux couches internes. Cette opération est complexe, notamment lorsque l'on souhaite obtenir un profil de barquettes avec de nombreuses nervures sur les surfaces externes. Dans ce type de barquettes, les barrières de fluides (liquide/gaz) sont posées sous la forme d'un film sur les faces externes des barquettes, ces faces externes étant souvent exposées à des chocs. Hors un simple grattage de ce film suffit pour que les propriétés de barrière de la barquette disparaissent.

Il est connu par ailleurs, par le document US 5 116 881, un procédé de coextrusion pour former des structures multicouches. Toutefois, les structures obtenues ne disposent pas de fonction d'absorption mais comportent simplement une couche barrière aux gaz.

La présente invention a donc pour objet de pallier un ou plusieurs des inconvénients de l'art antérieur en définissant un procédé de fabrication par coextrusion d'emballages plastiques absorbants destinés au conditionnement de produits alimentaires dans lequel une couche barrière aux fluides est intégrée dans l'emballage.

A cet effet, l'invention concerne un procédé de fabrication, par coextrusion, d'emballages plastiques du type absorbant formés notamment d'une structure multicouche et destinés aux produits alimentaires, comprenant l'introduction dans une extrudeuse de chaque matériau constituant chaque couche de ladite structure multicouche, caractérisé en ce qu'il comporte :
- l'introduction dans un canal central d'un répartiteur d'une matière plastique dite principale élaborée par extrusion, ladite matière plastique principale étant expansée et constituant une couche de structure inférieure,
- l'introduction, dans des éléments distincts d'admission dudit répartiteur, d'au moins un matériau adhésif extrudé, un polymère barrière aux gaz extrudé et un matériau expansé extrudé ayant des propriétés d'absorption, lesdits éléments d'admission comportant chacun au moins un canal dit secondaire débouchant sur ledit canal central,
- la superposition d'une pluralité de couches sur ladite couche de structure inférieure, chacune des couches issues des éléments distincts d'admission du répartiteur étant successivement admise dans le canal central,
- l'introduction dans le canal central de la couche supérieure comprenant la superposition sur une couche de liaison formée à partir du matériau adhésif extrudé d'une couche non homogène dudit matériau aux propriétés d'absorption, ladite couche non homogène incluant une couche de surface non absorbante et une couche absorbante à cellules ouvertes,
- coextrusion simultanée du matériau aux propriétés d'absorption, du polymère barrière aux fluides, dudit matériau adhésif et de ladite matière plastique principale dans une filière reliée audit canal central pour former la dite structure multicouche, ledit matériau adhésif étant disposé, sous la forme d'au moins une couche de liaison interne dans ladite structure, contre au moins un côté de la couche formée par le polymère barrière aux gaz, et
- la perforation de la couche de surface pour permettre la diffusion de liquides provenant des produits alimentaires vers la couche absorbante.

Selon une autre particularité de l'invention, au moins trois couches principales sont formées lors de la coextrusion, une première couche externe dite inférieure comprenant ladite matière plastique principale, une couche interne dite barrière épaisse d'environ 10 à 20 micromètres comprenant ledit polymère barrière aux gaz et une seconde couche externe dite supérieure comprenant ladite matière plastique principale, ladite couche interne étant reliée à chacune des couches externes par l'intermédiaire d'une couche de liaison comprenant ledit matériau adhésif.

Selon une autre particularité de l'invention, chaque couche de liaison a une épaisseur de l'ordre de 5 à 25 micromètres, ledit matériau adhésif étant réparti dans un nombre déterminé de canaux secondaires égal au nombre de couches de liaison dans ladite structure multicouche.

Selon une autre particularité de l'invention, ladite matière plastique principale est un polymère expansé à cellules ouvertes et au moins une des couches externes comporte une pellicule extérieure non absorbante pour le contact alimentaire avec une proportion minoritaire, supérieure à 3%, de cellules fermées.

Selon une autre particularité de l'invention, ladite matière plastique principale est du polystyrène expansé.

Selon une autre particularité de l'invention, chaque matériau est introduit sous forme de granulés dans une extrudeuse reliée audit répartiteur, ladite structure multicouche formée par coextrusion étant thermoformée à sa sortie de filière sur une roue de formage pourvue d'alvéoles de conformation, un découpage de la structure multicouche étant réalisé en synchronisme avec la position des alvéoles, la pellicule extérieure de la couche supérieure étant perforée en synchronisme avec la position des alvéoles.

Selon une autre particularité de l'invention, la partie absorbante de ladite couche externe supérieure est du type à cellules ouvertes en dessous de la pellicule extérieure formant la couche de surface.

Selon une autre particularité de l'invention, une polyoléfine extrudée est introduite dans un desdits éléments d'admission dudit répartiteur pour être coextrudée simultanément avec les autres matériaux.

Selon une autre particularité de l'invention, ledit polymère barrière aux gaz est le copolymère éthylène/alcool vinylique(EVOH).

Selon une autre particularité de l'invention, ladite couche supérieure non homogène est remplacée par la superposition d'une couche de surface d'une épaisseur de 10 à 50 micromètres formée par ladite polyoléfine sur une couche absorbante, une couche de liaison supplémentaire étant insérée entre la couche absorbante et la couche de surface, la couche de surface et la couche de liaison supplémentaire étant perforées pour permettre la diffusion de liquides provenant des produits alimentaires vers la couche absorbante, ladite couche externe inférieure étant à base de polystyrène non absorbant ou de ladite polyoléfine.

Selon une autre particularité, les couches externes de la structure multicouche comprennent du polyéthylène.

Un autre but de l'invention est d'apporter une solution à un ou plusieurs des problèmes rencontrés dans l'art antérieur en définissant un emballage plastique pour les produits alimentaires doté d'une couche barrière aux fluides intégrée et obtenu par le procédé selon l'invention.

Ce but est atteint par un emballage plastique du type absorbant comportant une structure multicouche pour le conditionnement de produits alimentaires réalisé par le procédé de coextrusion selon l'invention, ladite structure multicouche comprenant au moins une couche barrière aux gaz, au moins deux couches de liaison et au moins une première couche de structure, caractérisé en ce que ladite couche barrière au gaz est insérée, entre deux couches de liaison et ladite première couche de structure, rigide, est en matière plastique expansée pour constituer une couche de structure inférieure, ladite structure multicouche comprenant un matériau expansé extrudé ayant des propriétés d'absorption pour former une couche supérieure non homogène incluant une couche de surface non absorbante et une couche absorbante à cellules ouvertes, la couche de surface comportant des perforations pour permettre la diffusion de liquides provenant des produits alimentaires vers la couche absorbante.

Selon une autre particularité de l'invention, la couche barrière aux gaz comprend un polymère barrière aux gaz sélectionné parmi le groupe composé du copolymère éthylène/alcool vinylique (EVOH), du polyéthylène téréphtalate (PET), du chlorure de polyvinylidène (PVDC) et du polyéthylène naphtalate (PEN).

Selon une autre particularité de l'invention, dite matière plastique expansée est du polystyrène (PS).

Selon une autre particularité de l'invention, ladite couche supérieure comprend une partie inférieure absorbante d'une épaisseur de 0,6 à 6 mm liée à une desdites couches de liaison et une partie supérieure non absorbante comprenant des cellules fermées formant une pellicule externe pour le contact alimentaire.

Selon une autre particularité de l'invention, la couche de structure formant la couche inférieure de ladite structure multicouche est à base de polystyrène expansé ou de polyéthylène, liée à une desdites couches de liaison, forme la couche inférieure de ladite structure multicouche.

Selon une autre particularité de l'invention, les couches de liaison comportent de l'anhydride maléique greffée sur du polypropylène ou du polyéthylène, l'épaisseur de ces couches de liaison étant comprise entre 5 et 25 micromètres, l'épaisseur de ladite couche barrière aux gaz étant comprise entre 10 et 20 micromètres.

Selon une autre particularité de l'invention, ladite couche supérieure non homogène est remplacée par la superposition d'une couche de surface d'une épaisseur de 10 à 50 micromètres formée par une polyoléfine sur une couche absorbante, une couche de liaison supplémentaire étant insérée entre la couche absorbante et la couche de surface, la couche de surface et la couche de liaison supplémentaire étant perforées pour permettre la diffusion de liquides provenant des produits alimentaires vers la couche absorbante.

Selon une autre particularité de l'invention, la polyoléfine est du polyéthylène.

L'invention, avec ses caractéristiques et avantages, ressortira plus clairement à la lecture de la description faite en référence aux dessins annexés dans lesquels :
- la figure 1 représente schématiquement l'installation de coextrusion,
- la figure 2 représente une structure multicouche, sans couche d'absorption,
- la figure 3 et la figure 4 représentent des variantes de configuration de la structure multicouche de l'emballage selon l'invention avec une couche absorbante,
- la figure 5 représente l'emballage selon l'invention après l'étape de thermoformage,
- la figure 6 représente très schématiquement une vue partielle en coupe d'un mode de réalisation de l'emballage selon l'invention,
la figure 7 représente un exemple de répartiteur utilisé dans le procédé selon l'invention et sur lequel est indiquée de manière simplifiée la répartition des couches de la structure des figures 3 et 6.

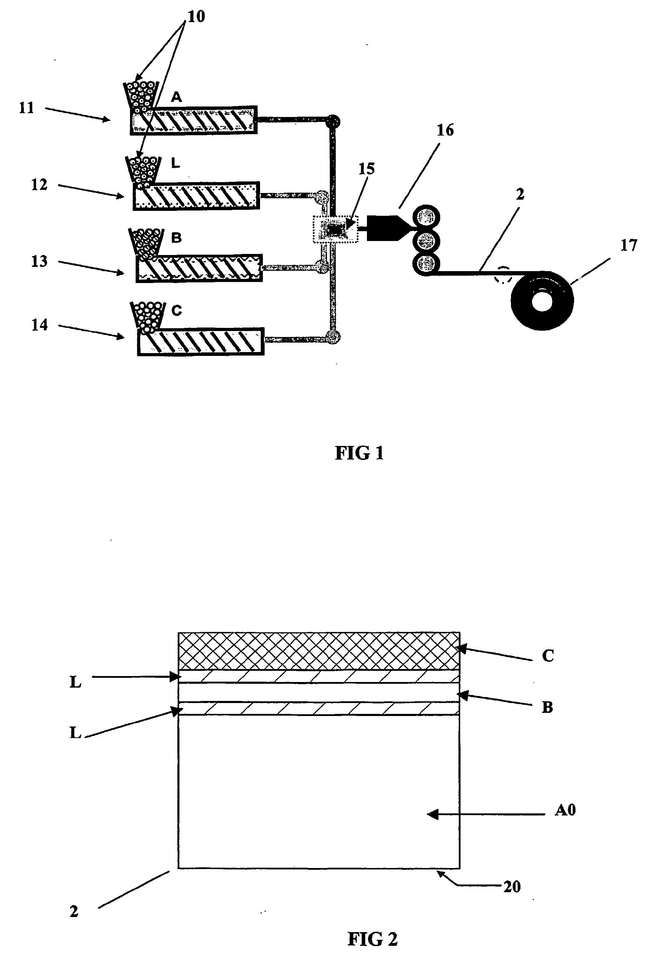

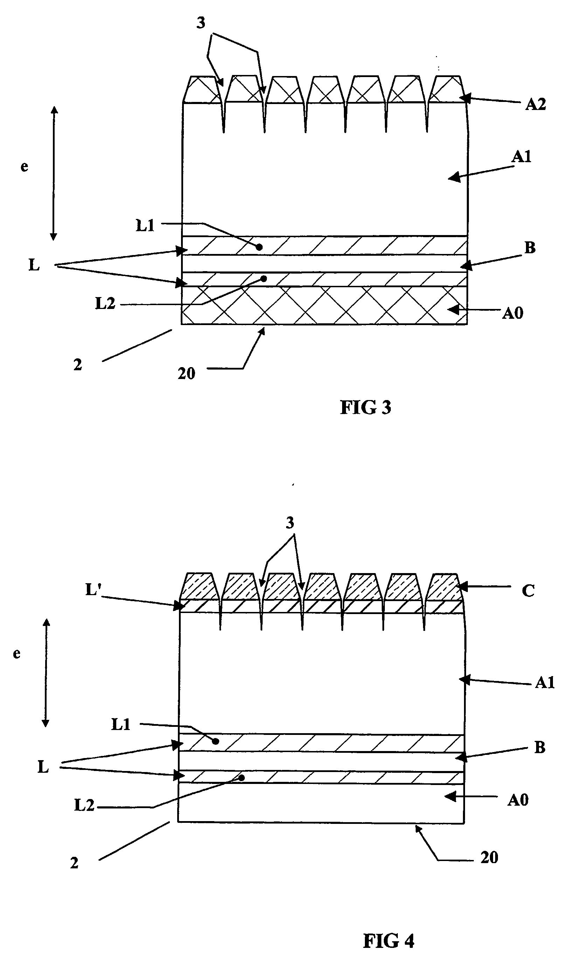

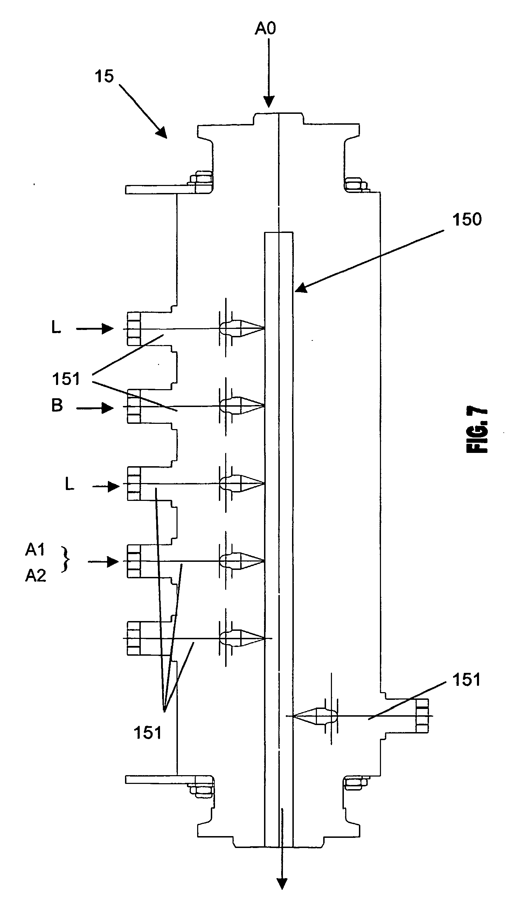

L'invention va être à présent décrite en référence aux figures 1, 5 et 7. L'emballage selon l'invention comporte une structure multicouche (2) obtenue par coextrusion simultanée des différentes couches. L'installation (1) de coextrusion comportera un certain nombre d'extrudeuses (11, 12, 13, 14) dans lesquelles sont introduits les granulés (10), une extrudeuse (11, 12, 13, 14) pour chaque couche, et un répartiteur (15) de couches permettant de réunir les couches avant leur introduction ou lors de leur introduction dans une filière (16). Cette installation (1) sera conforme à celle décrite dans les brevets FR 2 593 111 et FR 2 437 289 dont la requérante est titulaire. Un exemple de répartiteur (15) utilisé pour la formation d'une structure ayant une configuration spécifique décrite ci-dessous et représentée à la figure 3, est représenté en figure 7. Un répartiteur (15) comporte un canal central (150) raccordé à l'entrée de la filière (16). Le long de ce canal central (150) sont placés plusieurs canaux secondaires (151) juxtaposés, un canal secondaire (151) pour chaque couche de la structure à fabriquer. Chacun de ces canaux secondaires (151) juxtaposés est relié à une sortie de matière d'une extrudeuse (11, 12, 13, 14) et débouche sur le canal central (150). Une même extrudeuse peut alimenter un élément d'admission du répartiteur (15) se divisant en une pluralité de canaux secondaires (151). Cela peut être le cas notamment pour insérer dans la structure multicouche (2) plusieurs couches de liaison (L). Chacun des canaux secondaires (151) comporte un organe de réglage de la quantité de matière à déposer.

Ladite structure multicouche (2) formée par coextrusion est thermoformée à sa sortie de filière (16) sur une roue de formage (17) pourvue d'alvéoles de conformation. Un découpage (4) de l'emballage formé par cette structure multicouche (2) est réalisé en synchronisme avec la position des alvéoles et des perforations (3) peuvent être pratiquées sur le fond de l'emballage, dans le cas par exemple des barquettes absorbantes, en synchronisme avec la position des alvéoles.

La structure (2) multicouche de l'emballage selon l'invention comprend au moins une couche (A0, A1, A2) de structure rigide constituée d'une matière plastique expansée (A) et une couche barrière aux gaz (B). Ladite couche de structure est par exemple à base de polystyrène expansé et son épaisseur peut atteindre quelques millimètres pour obtenir une rigidité et une résistance suffisante. Ainsi, l'emballage selon l'invention peut être manipulé sans être détérioré et remplir son rôle de conservation pour les produits alimentaires. La couche barrière aux gaz (B) comprend un matériau barrière aux gaz pouvant être sélectionné par exemple parmi le groupe composé du copolymère éthylène/alcool vinylique (EVOH), du polyéthylène téréphtalate (PET), du chlorure de polyvinylidène (PVDC) et du polyéthylène naphtalate (PEN). Dans le mode de réalisation préféré de l'invention, cette couche barrière (B) est composée d'EVOH. Il est intéressant d'ajouter à la structure (2) une telle couche (B) faisant barrière notamment à l'oxygène et aux arômes pour protéger le produit contenu dans l'emballage. L'emballage selon l'invention, après remplissage, est en effet scellé à l'aide d'un film barrière transparent (non représenté) comprenant au moins un matériau imperméable aux gaz. Le film transparent comporte par exemple deux couches : EVOH/PE. Le film recouvre l'ouverture de l'emballage et est fixé au bord dudit emballage. Ce bord est en collerette pour garantir un scellage limitant la possibilité de pénétration de gaz dans l'emballage recouvert dudit film. Ce type d'emballage est alors particulièrement adapté pour un conditionnement de produits alimentaires sous atmosphère modifiée. La teneur molaire de l'éthylène par rapport à l'alcool vinylique varie de 29 à 44% dans le copolymère EVOH. L'épaisseur de la couche barrière aux gaz (B) est comprise par exemple entre 10 et 20 micromètres.

La barrière formée d'EVOH peut être insérée dans une couche interne de l'emballage. Des couches de liaison (L) sont insérées de chaque côté de la couche barrière (B) pour permettre la cohésion entre cette couche barrière (B) et les autres couches de structure. Dans un tel mode de réalisation de l'invention, la couche fonctionnelle d'EVOH (B) est intercalée entre deux couches de liaison (L). Ces couches de liaison (L) peuvent représenter chacune une épaisseur allant de 5 à 25 micromètres. Ces couches adhésives (L) sont par exemple constituées de polypropylène ou de polyéthylène comprenant des greffes d'anhydride maléique réagissant chimiquement avec les fonctions OH de l'EVOH en créant des liaisons covalentes.

L'anhydride maléique, dont la formule brute est C₄H₂O₃, est greffé sur du polypropylène ou du polyéthylène par une addition classique avec perte d'un de ses hydrogènes labiles. La couche barrière (B) peut aussi constituer une face externe de la structure (2) de l'emballage dans une autre variante de réalisation.

L'invention va être à présent décrite en liaison avec les figures 2, 3 et 6. Dans une variante de l'invention, trois couches de structure (A1, B, C) sont formées lors de la coextrusion. Une première couche externe dite inférieure (A0) et correspondant notamment au-dessous de la barquette comprend du polystyrène expansé non absorbant ou un autre matériau expansé aux propriétés physiques analogues. Une seconde couche (B), interne, comprend ledit matériau barrière aux gaz et un troisième matériau non absorbant forme une couche externe supérieure non absorbante (C). Cette couche supérieure non absorbante (C) de l'emballage est en contact avec les produits alimentaires. Ces trois couches (A0, B, C) sont liées entre elles par des couches de liaison (L) formées d'un matériau adhésif tel que celui décrit plus haut. Dans le mode de réalisation de la figure 2, la couche inférieure (A0) est en polystyrène à cellules fermées et constitue l'essentiel de l'épaisseur de la structure multicouche (2). La proportion de cellules fermées peut être minoritaire et dépasse 3%. La couche inférieure (A0), comprenant par exemple 5% de cellules fermées, n'absorbe plus les liquides. La couche supérieure non absorbante (C) du mode de réalisation de la figure 2 peut être constituée d'une polyoléfine ou d'un mélange de polyoléfines compris dans la liste des matériaux compatibles avec un contact alimentaire. Elle peut être en polyéthylène ou en polystyrène. Le polyéthylène présente l'avantage d'être facilement scellé par un film de protection et adapté pour le contact alimentaire. Dans cette variante, la barquette n'est pas absorbante et l'épaisseur de la couche supérieure (C) dépasse les 10 micromètres, variant par exemple entre 10 et 50 micromètres. La couche barrière (B), insérée entre deux couches de liaison (L) et positionnée en dessous de la couche supérieure (C), est à une distance de l'ordre de 30 à 70 micromètres du côté de l'emballage en contact avec les aliments et à quelques millimètres par exemple de la surface extérieure (20) de l'emballage.

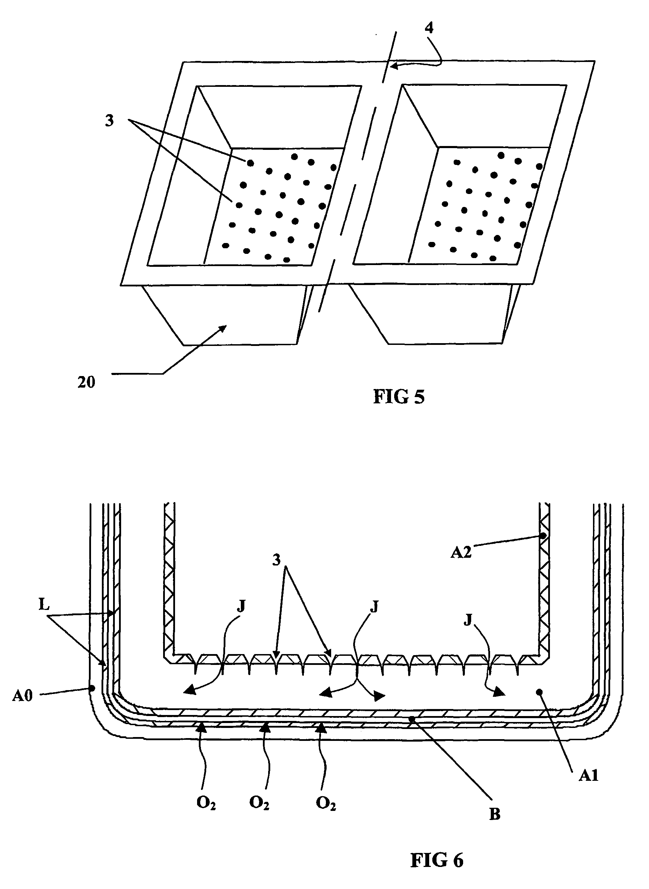

Pour l'élaboration d'un emballage absorbant possédant également des propriétés de barrière aux gaz, il faut envisager une structure multicouche (2) intégrant une couche absorbante (A1). Pour cela l'emballage selon l'invention peut comporter une couche supérieure de polystyrène expansé ayant des cellules fermées uniquement en surface, comme représenté aux figures 3 et 6. Dans cette variante, la couche supérieure de polystyrène expansé se divise ainsi en une couche de surface (A2) non absorbante et une couche absorbante (A1) à cellules ouvertes. Cette couche supérieure comprend des trous (3) traversant ladite couche de surface (A2) qui est en contact avec les aliments pour créer des passages vers la zone absorbante (A1), comme représenté à la figure 6. L'épaisseur de cette couche de surface (A2) ne dépasse pas quelques centaines de micromètres, la fermeture des cellules du polymère expansé étant réalisée uniquement en surface, par exemple au contact de l'air ambiant lors de l'extrusion. Les perforations (3) en surface permettent la diffusion (J) de liquides provenant des aliments vers ladite partie absorbante (A1) afin d'optimiser la présentation du produit alimentaire exposé dans l'emballage selon l'invention. L'épaisseur (e) de la couche absorbante (A1) est suffisante pour que plusieurs millilitres de liquides puissent être absorbés sans que ces liquides n'atteignent la base de ladite couche absorbante (A1). Cette épaisseur (e) est par exemple comprise entre 0,6 et 6 mm. L'épaisseur de la couche de liaison (L1) en contact avec la couche absorbante (A1) est éventuellement plus importante que celle de l'autre couche de liaison (L2). Elle peut être ainsi de 20 micromètres lorsque l'épaisseur de l'autre couche (L2) est simplement de 8 micromètres. Le bord de l'emballage est en collerette pour garantir un scellage limitant la possibilité de pénétration de gaz dans l'emballage lorsqu'il est recouvert d'un film barrière de protection. La partie absorbante en polystyrène expansé (A1) peut être écrasée au niveau de cette collerette pour le scellage.

Dans le mode de réalisation des figures 3 et 6, la couche barrière aux gaz (B) est toujours insérée entre deux couches de liaison (L1, L2) telles que celles décrites précédemment. Cette couche barrière (B) peut être intercalée sous la couche absorbante (A1). Une deuxième couche de structure à base de polystyrène expansé est liée à une desdites couches de liaison pour former la couche inférieure (A0) de ladite structure multicouche (2) de l'emballage. Cette couche inférieure (A0), possédant des cellules fermées, est non absorbante. La proportion de cellules fermées dépasse par exemple 3%. L'épaisseur de cette couche inférieure (A0) peut varier de quelques dizaines de micromètres jusqu'à un millimètre environ. La couche barrière (B), interne, est ainsi protégée de la détérioration et empêche efficacement l'oxydation des aliments par l'oxygène (O₂) de l'air. Dans cette variante de réalisation, un seul type de matériau, le polystyrène, est utilisé en dehors du matériau barrière aux gaz et du matériau adhésif formant les couches de liaison (L). Du polyéthylène peut aussi être incorporé entre la couche absorbante (A1) et la couche de liaison voisine (L1).

Dans un mode de réalisation différent de l'invention, la structure multicouche peut comprendre un matériau différent du polystyrène pour le contact alimentaire. La figure 4 représente ainsi une structure (2) semblable à celle de la figure 3, mais ne possédant pas une pellicule de surface non absorbante (A2) en polymère expansé. Dans cette variante, la couche de surface est formée d'une fine couche d'une polyoléfine liée à la couche absorbante (A1) par l'intermédiaire d'une couche de liaison (L') supplémentaire. Cette fine couche supérieure (C), d'une épaisseur d'environ 10 à 50 micromètres, est par exemple en polyéthylène. Cette couche (C) et ladite couche de liaison supplémentaire (L') sont perforées lors du thermoformage, par exemple dans une zone de la structure (2) correspondant au fond de l'emballage. Le polystyrène non absorbant formant la couche inférieure (A0) peut être remplacé par du polyéthylène dans cette variante de réalisation.

L'invention va être à présent décrite en référence aux figures 6 et 7. Pour aboutir à la structure multicouche (2) présentée à la figure 6, la répartition des couches dans le répartiteur (15) comprend l'introduction dans le canal central (150) du matériau extrudé constituant la couche inférieure (A0), par exemple du polymère expansé non absorbant. Ensuite, une juxtaposition de canaux secondaires (151) permet de superposer dans un ordre déterminé les autres couches au-dessus de la couche inférieure (A0). Dans le cas illustré à la figure 7, un canal secondaire (151) d'introduction d'une première couche de liaison (L) précède ainsi un canal secondaire (151) d'introduction de la couche barrière (B), suivi d'un canal secondaire (151) d'introduction d'une seconde couche de liaison (L) puis d'un canal secondaire (151) d'introduction de la couche supérieure en matériau expansé comportant une couche de surface (A2) non absorbante et une couche absorbante (A1) à cellules ouvertes. Chacun des canaux secondaires (151) comporte un organe de réglage de la quantité de matière à déposer pour ajuster l'épaisseur de la couche formée lors de la coextrusion. Le répartiteur (15) peut comporter des éléments d'admission se divisant en une pluralité de canaux secondaires (151) pour permettre qu'un même matériau issu d'une seule extrudeuse, par exemple le matériau adhésif, puisse entrer dans la constitution de couches distinctes. La répartition peut naturellement s'organiser autrement, par exemple avec l'introduction dans le canal central (150) de la couche supérieure incluant la couche absorbante (A1) et la couche de surface (A2). Dans ce cas, les canaux secondaires (151) sont agencés pour déposer les autres couches par en dessous. Le répartiteur (15) peut également comporter des canaux secondaires (151) répartis au-dessus et en dessous du canal central (150).

Un des avantages de l'invention réside dans le fait que l'emballage, étant absorbant, est adapté au conditionnement sous atmosphère modifiée de denrées alimentaires, notamment des viandes. Le produit est en général bien visible par le consommateur à travers le film transparent. Le choix du consommateur sera déterminé par l'aspect attractif du produit et la moindre trace de liquide, le moindre changement de couleur dû à l'oxydation de l'air suffisent pour qu'un produit soit totalement délaissé. La structure (2) de l'emballage permet d'augmenter la durée de vie du produit conditionné grâce à une couche barrière particulièrement protégée des dégradations puisqu'elle est interne.

Un autre des avantages de l'invention réside dans la simplification du procédé de fabrication de l'emballage qui se déroule temps mort et sans étape de reprise d'un des matériaux. L'enchaînement des étapes permet une réduction des coûts de production.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de fabrication, par coextrusion, d'emballages plastiques du type absorbant formés notamment d'une structure multicouche et destinés aux produits alimentaires, comprenant l'introduction dans une extrudeuse de chaque matériau constituant chaque couche de ladite structure multicouche, **caractérisé en ce qu'**il comporte :
- l'introduction dans un canal central (150) d'un répartiteur (15) d'une matière plastique dite principale élaborée par extrusion, ladite matière plastique principale étant expansée et constituant une couche de structure inférieure (A0),
- l'introduction, dans des éléments distincts d'admission dudit répartiteur (15), d'au moins un matériau adhésif extrudé, un polymère barrière (B) aux gaz extrudé et un matériau expansé extrudé ayant des propriétés d'absorption, lesdits éléments d'admission comportant chacun au moins un canal dit secondaire (151) débouchant sur ledit canal central (150),
- la superposition d'une pluralité de couches sur ladite couche de structure inférieure (A0), chacune des couches issues des éléments distincts d'admission du répartiteur étant successivement admise dans le canal central (150), l'introduction dans le canal central (150) de la couche supérieure comprenant la superposition sur une couche de liaison (L) formée à partir du matériau adhésif extrudé d'une couche non homogène dudit matériau aux propriétés d'absorption, ladite couche non homogène incluant une couche de surface (A2) non absorbante et une couche absorbante (A1) à cellules ouvertes,
- coextrusion simultanée du matériau aux propriétés d'absorption, du polymère barrière (B) aux gaz, dudit matériau adhésif et de ladite matière plastique principale dans une filière reliée audit canal central (150) pour former la dite structure multicouche, ledit matériau adhésif étant disposé, sous la forme d'au moins une couche de liaison interne dans ladite structure, contre au moins un côté de la couche formée par le polymère barrière (B) aux gaz, et
- la perforation de la couche de surface (A2) pour permettre la diffusion de liquides provenant des produits alimentaires vers la couche absorbante (A1).

2. Procédé selon la revendication 1, dans lequel au moins trois couches principales sont formées lors de la coextrusion, une première couche externe dite inférieure (A0) comprenant ladite matière plastique principale, une couche interne dite barrière épaisse d'environ 10 à 20 micromètres comprenant ledit polymère barrière (B) aux gaz et une seconde couche externe (A1, A2) dite supérieure comprenant ladite matière plastique principale, ladite couche interne étant reliée à chacune des couches externes par l'intermédiaire d'une couche de liaison (L) comprenant ledit matériau adhésif.

3. Procédé selon la revendication 2, dans lequel chaque couche de liaison a une épaisseur de l'ordre de 5 à 25 micromètres, ledit matériau adhésif étant réparti dans un nombre déterminé de canaux secondaires (151) égal au nombre de couches de liaison dans ladite structure multicouche.

4. Procédé selon l'une quelconque des revendications 1 à 3, dans lequel ladite matière plastique principale est un polymère expansé à cellules ouvertes et au moins une des couches externes comporte une pellicule extérieure non absorbante pour le contact alimentaire avec une proportion minoritaire, supérieure à 3%, de cellules fermées.

5. Procédé selon l'une quelconque des revendications 1 à 4, dans lequel ladite matière plastique principale est du polystyrène expansé.

6. Procédé selon l'une quelconque des revendications 1 à 5, dans lequel chaque matériau est introduit sous forme de granulés dans une extrudeuse reliée audit répartiteur (15), ladite structure multicouche formée par coextrusion étant thermoformée à sa sortie de filière sur une roue de formage pourvue d'alvéoles de conformation, un découpage de la structure multicouche étant réalisé en synchronisme avec la position des alvéoles, la pellicule extérieure de la couche supérieure étant perforée en synchronisme avec la position des alvéoles.

7. Procédé selon l'une quelconque des revendications 4 à 6, dans lequel la partie absorbante de ladite couche externe supérieure (A1, A2), est du type à cellules ouvertes en dessous de la pellicule extérieure formant la couche de surface (A2).

8. Procédé selon l'une quelconque des revendications 1, 3, et 6, dans lequel une polyoléfine extrudée est introduite dans un desdits éléments d'admission dudit répartiteur (15) pour être coextrudée simultanément avec les autres matériaux.

9. Procédé selon l'une quelconque des revendications 1 à 8, dans lequel ledit polymère barrière (B) aux gaz est le copolymère éthylène/alcool vinylique(EVOH).

10. Procédé selon l'une quelconque des revendications 8 et 9, **caractérisé en ce que** ladite couche supérieure (A1, A2) non homogène est remplacée par la superposition d'une couche de surface (C) d'une épaisseur de 10 à 50 micromètres formée par ladite polyoléfine sur une couche absorbante (A1), une couche de liaison supplémentaire (L') étant insérée entre la couche absorbante (A1) et la couche de surface (C), la couche de surface (C) et la couche de liaison supplémentaire (L') étant perforées pour permettre la diffusion de liquides provenant des produits alimentaires vers la couche absorbante (A1), ladite couche externe inférieure étant à base de polystyrène non absorbant ou de ladite polyoléfine.

11. Procédé selon l'une quelconque des revendications 8 à 10, dans lequel les couches externes de la structure multicouche comprennent du polyéthylène.

12. Emballage plastique du type absorbant comportant une structure multicouche pour le conditionnement de produits alimentaires réalisé par le procédé de coextrusion selon les revendications 1 à 11, ladite structure multicouche comprenant au moins une couche (B) barrière aux gaz, au moins deux couches de liaison (L) et au moins une première couche de structure (A0), **caractérisé en ce que** ladite couche (B) barrière au gaz est insérée, entre deux couches de liaison (L) et ladite première couche de structure (A0), rigide, est en matière plastique expansée pour constituer une couche de structure inférieure (A0), ladite structure multicouche comprenant un matériau expansé extrudé ayant des propriétés d'absorption pour former une couche supérieure non homogène incluant une couche de surface (A2) non absorbante et une couche absorbante (A1) à cellules ouvertes, la couche de surface (A2) comportant des perforations (3) pour permettre la diffusion de liquides provenant des produits alimentaires vers la couche absorbante (A1).

13. Emballage plastique selon la revendication 12, dans lequel la couche (B) barrière aux gaz comprend un polymère barrière aux gazsélectionné parmi le groupe composé du copolymère éthylène/alcool vinylique (EVOH), du polyéthylène téréphtalate (PET), du chlorure de polyvinylidène (PVDC) et du polyéthylène naphtalate (PEN).

14. Emballage plastique selon l'une quelconque des revendications 12 et 13, dans lequel ladite matière plastique expansée est du polystyrène (PS).

15. Emballage plastique selon la revendication 14, dans lequel ladite couche supérieure (A1, A2) comprend une partie inférieure absorbante d'une épaisseur de 0,6 à 6 mm liée à une desdites couches de liaison et une partie supérieure non absorbante comprenant des cellules fermées formant une pellicule externe pour le contact alimentaire.

16. Emballage plastique selon l'une quelconque des revendications 12 à 15, dans lequel la couche de structure (A0) formant la couche inférieure de ladite structure multicouche est à base de polystyrène expansé ou de polyéthylène et liée à une desdites couches de liaison (L).

17. Emballage selon l'une quelconque des revendications 12 à 16, dans lequel les couches de liaison (L) comportent de l'anhydride maléique greffée sur du polypropylène ou du polyéthylène, l'épaisseur de ces couches de liaison étant comprise entre 5 et 25 micromètres, l'épaisseur de ladite couche (B) barrière aux gaz étant comprise entre 10 et 20 micromètres.

18. Emballage selon l'une quelconque des revendications 12 à 14, **caractérisé en ce que** ladite couche supérieure (A1, A2) non homogène est remplacée par la superposition d'une couche de surface (C) d'une épaisseur de 10 à 50 micromètres formée par une polyoléfine sur une couche absorbante (A1), une couche de liaison supplémentaire (L') étant insérée entre la couche absorbante (A1) et la couche de surface (C), la couche de surface (C) et la couche de liaison supplémentaire (L') étant perforées pour permettre la diffusion de liquides provenant des produits alimentaires vers la couche absorbante (A1).

19. Emballage selon la revendication 18, dans lequel la polyoléfine est du polyéthylène.

## Claims

1. Method for manufacturing, by coextrusion, plastic packages of the absorbent type formed in particular from a multilayer structure and intended for foodstuffs, comprising the introduction into an extruder of each material constituting each layer of said multilayer structure, **characterised in that** it comprises:
- the introduction into a central channel (150) of a distributor (15), of what is known as the "principal" plastic material prepared by extrusion, said principal plastic material being expanded and constituting a lower structural layer (A0),
- the introduction, into distinct inlet elements of said distributor (15), of at least one extruded adhesive material, an extruded gas barrier polymer (B) to and an extruded expanded material having absorption properties, said inlet elements each comprising at least one "secondary" channel (151) leading to said central channel (150),
- the superimposition of a plurality of layers on said lower structural layer (A0), each of the layers coming from the distinct inlet elements of the distributor being successively admitted into the central channel (150), the introduction into the central channel (150) of the upper layer comprising the superimposition on a bonding layer (L) formed from the extruded adhesive material of a non-homogeneous layer of said material with absorption properties, said non-homogeneous layer including a non-absorbent surface layer (A2) and an absorbent layer (A1) with open cells,
- simultaneous coextrusion of the material with absorption properties, the gas barrier polymer (B), said adhesive material and said principal plastic material in a die connected to said central channel (150) in order to form said multilayer structure, said adhesive material being placed, in the form of at least one internal bonding layer in said structure, against at least one side of the layer formed by the gas barrier polymer (B), and
- perforation of the surface layer (A2) in order to allow the diffusion of liquids coming from the foodstuffs towards the absorbent layer (A1).

2. Method according to Claim 1, in which at least three main layers are formed during coextrusion, a first "lower" outer layer (A0) comprising said principal plastic material, an inner layer known as a thick barrier of approximately 10 to 20 micrometres comprising said gas barrier polymer (B) and a second "upper" outer layer (A1, A2) comprising said principal plastic material, said inner layer being connected to each of the outer layers via a bonding layer (L) comprising said adhesive material.

3. Method according to Claim 2, in which each bonding layer has a thickness of the order of 5 to 25 micrometres, said adhesive material being distributed in a given number of secondary channels (151) equal to the number of bonding layers in said multilayer structure.

4. Method according to any one of Claims 1 to 3, in which said principal plastic material is an expanded polymer with open cells and at least one of the outer layers comprises a non-absorbent outer film for food contact with a minority proportion, greater than 3%, of closed cells.

5. Method according to any one of Claims 1 to 4, in which said principal plastic material is expanded polystyrene.

6. Method according to any one of Claims 1 to 5, in which each material is introduced in granule form into an extruder connected to said distributor (15), said multilayer structure formed by coextrusion being thermoformed as it leaves the die on a forming wheel provided with shaping cells, the multilayer structure being cut up in synchronism with the position of the cells, the outer film of the upper layer being perforated in synchronism with the position of the cells.

7. Method according to any one of Claims 4 to 6, in which the absorbent portion of said upper outer layer (A1, A2), is of the type with open cells below the outer film forming the surface layer (A2).

8. Method according to any one of Claims 1, 3, and 6, in which an extruded polyolefin is introduced into one of said inlet elements of said distributor (15) so as to be coextruded simultaneously with the other materials.

9. Method according to any one of Claims 1 to 8, in which said gas barrier polymer (B) is the ethylene/vinyl alcohol (EVOH) copolymer.

10. Method according to any one of Claims 8 and 9, **characterised in that** said non-homogeneous upper layer (A1, A2) is replaced by the superimposition of a surface layer (C) 10 to 50 micrometres thick, formed by said polyolefin on an absorbent layer (A1), an additional bonding layer (L') being inserted between the absorbent layer (A1) and the surface layer (C), the surface layer (C) and the additional bonding layer (L') being perforated in order to allow the diffusion of liquids coming from the foodstuffs towards the absorbent layer (A1), said lower outer layer being based on non-absorbent polystyrene or said polyolefin.

11. Method according to any one of Claims 8 to 10, in which the outer layers of the multilayer structure comprise polyethylene.

12. Plastic package of the absorbent type comprising a multilayer structure for packaging foodstuffs by the coextrusion process according to Claims 1 to 11, said multilayer structure comprising at least one gas barrier layer (B), at least two bonding layers (L) and at least a first structural layer (A0), **characterised in that** said gas barrier layer (B) is inserted between two bonding layers (L) and said first rigid, structural layer (A0) is made of expanded plastic so as to constitute a lower structural layer (A0), said multilayer structure comprising an extruded expanded material having absorption properties so as to form a non-homogeneous upper layer including a non-absorbent surface layer (A2) and an absorbent layer (A1) with open cells, the surface layer (A2) comprising perforations (3) in order to allow the diffusion of liquids coming from the foodstuffs towards the absorbent layer (A1).

13. Plastic package according to Claim 12, in which the gas barrier layer (B) comprises a gas barrier polymer selected from the group made up of ethylene/vinyl alcohol (EVOH) copolymer, polyethylene terephthalate (PET), polyvinylidene chloride (PVDC) and polyethylene naphthalate (PEN).

14. Plastic package according to any one of Claims 12 and 13, in which said expanded plastic material is polystyrene (PS).

15. Plastic package according to Claim 14, in which said upper layer (A1, A2) comprises an absorbent lower portion 0.6 to 6 mm thick bonded to one of said bonding layers and a non-absorbent upper portion comprising closed cells forming an outer film for food contact.

16. Plastic package according to any one of Claims 12 to 15, in which the structural layer (A0) forming the lower layer of said multilayer structure is based on expanded polystyrene or polyethylene and bonded to one of said bonding layers (L).

17. Package according to any one of Claims 12 to 16, in which the bonding layers (L) comprise maleic anhydride grafted onto polypropylene or polyethylene, the thickness of these bonding layers being between 5 and 25 micrometres, the thickness of said gas barrier layer (B) being between 10 and 20 micrometres.

18. Package according to any one of Claims 12 to 14, **characterised in that** said non-homogeneous upper layer (A1, A2) is replaced by the superimposition of a surface layer (C) 10 to 50 micrometres thick formed by a polyolefin on an absorbent layer (A1), an additional bonding layer (L') being inserted between the absorbent layer (A1) and the surface layer (C), the surface layer (C) and the additional bonding layer (L') being perforated in order to allow the diffusion of liquids coming from the foodstuffs towards the absorbent layer (A1).

19. Package according to Claim 18, in which the polyolefin is polyethylene.

## Patentansprüche

1. Verfahren zur Herstellung, durch Koextrusion, von Kunststoffverpackungen vom absorbierenden Typ, die insbesondere durch eine Mehrschichtenstruktur gebildet und für Lebensmittel vorgesehen sind, wobei das Verfahren das Einführen eines jeden Materials, das jede Schicht der Mehrschichtenstruktur bildet, in einen Extruder umfasst, **dadurch gekennzeichnet, dass** es folgendes aufweist:
- das Einführen eines durch Extrusion ausgeformten, als Hauptkunststoff bezeichneten Kunststoffs in einen mittleren Kanal (15) eines Verteilers (15), wobei der Hauptkunststoff geschäumt ist und eine untere Strukturschicht (A0) bildet,
- das Einführen mindestens eines extrudierten Haftmaterials, eines extrudierten Polymers (B), das gegenüber Gas eine Barrierewirkung hat, und eines extrudierten, geschäumten Materials mit Absorptionseigenschaften in getrennte Zufuhrelemente des Verteilers (15), wobei die Zufuhrelemente jeweils mindestens einen sogenannten sekundären Kanal (151) aufweisen, der in den mittleren Kanal (150) mündet,
- die Überlagerung einer Vielzahl von Schichten auf der unteren Strukturschicht (A0), wobei jede der aus den getrennten Zufuhrelementen des Verteilers stammenden Schichten nacheinander in den mittleren Kanal (150) zugeführt werden, wobei das Einführen der oberen Schicht in den mittleren Kanal (150) die Überlagerung einer Verbindungsschicht (L), die aus dem extrudierten Haftmaterials gebildet ist, mit einer nicht homogenen Schicht des Materials mit den Absorptionseigenschaften beinhaltet, wobei die nicht homogene Schicht eine nichtabsorbierende Oberflächenschicht (A2) und eine absorbierende, offenzellige Schicht (A1) einschließt,
- die gleichzeitige Koextrusion des Materials mit den Absorptionseigenschaften, des Polymers (B) mit Barrierewirkung gegenüber Gas, des Haftmaterials und des Hauptkunststoffs in einer Extruderdüse, die mit dem mittleren Kanal (150) verbunden ist, um die Mehrschichtenstruktur zu bilden, wobei das Haftmaterial als mindestens eine innere Verbindungsschicht in der Struktur gegen mindestens eine Seite der Schicht angeordnet ist, die vom Polymer (B) mit Barrierewirkung gegenüber Gas gebildet ist, und
- das Perforieren der Oberflächenschicht (A2), um die Diffusion von Flüssigkeiten aus den Nahrungsmitteln zur absorbierenden Schicht (A1) zu ermöglichen.

2. Verfahren nach Anspruch 1, bei welchem beim Extrudieren mindestens drei Hauptschichten gebildet werden, nämlich eine erste, sogenannte untere Außenschicht (A0), die den Hauptkunststoff aufweist, eine innere, sogenannte Barriereschicht mit einer Dicke von etwa 10 bis 20 µm, die das Polymer (B) mit Barrierewirkung gegenüber Gas aufweist, und eine zweite, sogenannte obere Außenschicht (A1, A2), die den Hauptkunststoff aufweist, wobei die Innenschicht mit jeder der Außenschichten über eine Verbindungsschicht (L) verbunden ist, die das Haftmaterial aufweist.

3. Verfahren nach Anspruch 2, bei welchem jede Verbindungsschicht eine Dicke von etwa 5 bis 25 µm aufweist, wobei das Haftmaterial in einer bestimmten Anzahl von Sekundarkanälen (151) verteilt ist, die der Anzahl von Verbindungsschichten in der Mehrschichtenstruktur gleich ist.

4. Verfahren nach einem der Ansprüche 1 bis 3, bei welchem der Hauptkunststoff ein geschäumtes, offenzelliges Polymer ist und mindestens eine der Außenschichten eine nichtabsorbierende Außenfolie aufweist, die für den Kontakt mit Lebensmitteln mit einem Minderheitsanteil an geschlossenen Zellen, der über 3 % liegt, vorgesehen ist.

5. Verfahren nach einem der Ansprüche 1 bis 4, bei welchem der Hauptkunststoff Polystyrolschaum ist.

6. Verfahren nach einem der Ansprüche 1 bis 5, bei welchem jedes Material als Granulat in einen Extruder eingeführt wird, der mit dem Verteiler (15) verbunden ist, wobei die durch Koextrusion gebildete Mehrschichtenstruktur bei ihrem Ausgang aus der Extruderdüse auf einem Formrad thermogeformt wird, das mit Gestaltungszellen versehen ist, wobei ein Ausschneiden der Mehrschichtenstruktur mit der Position der Zellen synchron erfolgt, wobei das Perforieren der Außenfolie der oberen Schicht mit der Position der Zellen synchron erfolgt.

7. Verfahren nach einem der Ansprüche 4 bis 6, bei welchem der absorbierende Teil der oberen Außenschicht (A1, A2) unterhalb der die Oberflächenschicht (A2) bildenden Außenfolie vom offenzelligen Typ ist.

8. Verfahren nach einem der Ansprüche 1, 3 und 6, bei welchem ein extrudiertes Polyolefin in ein der Zufuhrelemente des Verteilers (15) eingeführt wird, um gleichzeitig mit den anderen Materialien koextrudiert zu werden.

9. Verfahren nach einem der Ansprüche 1 bis 8, bei welchem das Polymer (B), das eine Barrierewirkung gegenüber Gas hat, das Ehtylen-Vinyl-Alkohol-Copolymer (EVOH) ist.

10. Verfahren nach einem der Ansprüche 8 und 9, **dadurch gekennzeichnet, dass** die obere, nichthomogene Schicht (A1, A2) durch die Überlagerung einer Oberflächenschicht (C) ersetzt wird, die eine Dicke von 10 bis 50 µm hat und von dem Polyolefin auf einer absorbierenden Schicht (A1) gebildet ist, wobei eine zusätzliche Verbindungsschicht (L') zwischen die absorbierende Schicht (A1) und die Oberflächenschicht (C) eingsetzt ist, wobei die Oberflächenschicht (C) und die zusätzliche Verbindungsschicht (L') perforiert werden, um die Diffusion von Flüssigkeiten aus den Nahrungsmitteln zur absorbierenden Schicht (A1) zu ermöglichen, wobei die innere Außenschicht auf der Basis von nichtabsorbierendem Polystyrol oder dem Polyolefin gebildet ist.

11. Verfahren nach einem der Ansprüche 8 bis 10, bei welchem die Außenschichten der Mehrschichtenstruktur Polyethylen enthalten.

12. Kunststoffverpackung vom absorbierendem Typ mit einer Mehrschichtenstruktur für das Verpacken von Nahrungsmitteln, die nach dem Koextrusionsverfahren nach den Ansprüchen 1 bis 11 hergestellt ist, wobei die Mehrschichtenstruktur mindestens eine Barriereschicht (B) gegenüber Gas, mindestens zwei Verbindungsschichten (L) und mindestens eine erste Strukturschicht (A0) aufweist, **dadurch gekennzeichnet, dass** die Barriereschicht (B) gegenüber Gas zwischen zwei Verbindungsschichten (L) eingesetzt ist und die erste, starre Strukturschicht (A0) aus geschäumten Kunststoff besteht, um eine untere Strukturschicht (A0) zu bilden, wobei die Mehrschichtenstruktur ein extrudiertes, geschäumtes Material mit Absorptionseigenschaften aufweist, um eine obere, nichthomogene Schicht zu bilden, die eine nicht absorbierende Oberflächenschicht (A2) und eine offenzellige absorbierende Schicht (A1) einschließt, wobei die Oberflächenschicht (A2) Perforierungen (3) aufweist, um die Diffusion von Flüssigkeiten aus den Nahrungsmitteln zur absorbierenden Schicht (A1) zu ermöglichen.

13. Kunststoffverpackung nach Anspruch 12, bei welcher die Barriereschicht (B) gegenüber Gas ein Polymer mit Barrierewirkung gegenüber Gas aufweist, das aus der Gruppe des Ehtylen-Vinyl-Alkohol Copolymers EVOH, des Polyethylenterephthalats (PET), des Polyvinylidenchlorids (PVDC) und des Polyethylennaphthalats (PEN) gewählt ist.

14. Kunststoffverpackung nach einem der Ansprüche 12 und 13, bei welcher der geschäumte Kunststoff Polystyrol (PS) ist.

15. Kunststoffverpackung nach Anspruch 14, bei welcher die obere Schicht (A1, A2) einen unteren, absorbierenden Teil mit einer Dicke von 0,6 bis 6 mm aufweist, der mit einer der Verbindungsschichten verbunden ist, und einen oberen, nichtabsorbierenden Teil mit geschlossenen Zellen, der eine Außenfolie für den Kontakt mit Nahrungsmitteln bildet.

16. Kunststoffverpackung nach einem der Ansprüche 12 bis 15, bei welcher die die untere Schicht der Mehrschichtenstruktur bildende Strukturschicht (A0) auf der Basis von Polystyrolschaum oder Polyethylen gebildet und mit einer der Verbindungsschichten (L) verbunden ist.

17. Verpackung nach einem der Ansprüche 12 bis 16, in welcher die Verbindungsschichten (L) auf Polypropylen oder Polyethylen aufgebrachtes Maleinsäureanhydrid enthalten, wobei die Dicke dieser Verbindungsschichten zwischen 5 und 25 µm und die der Barriereschicht (B) gegenüber Gas zwischen 10 und 20 µm liegt.

18. Verpackung nach einem der Ansprüche 12 bis 14, **dadurch gekennzeichnet, dass** die obere, nichthomogene Schicht (A1, A2) durch die Überlagerung einer Oberflächenschicht (C) mit einer Dicke von 10 bis 50 µm, die aus einem Polyolefin auf einer absorbierenden Schicht (A1) gebildet ist, ersetzt wird, wobei eine zusätzliche Verbindungsschicht (L') zwischen die absorbierende Schicht (A1) und die Oberflächenschicht (C) eingesetzt ist, wobei die Oberflächenschicht (C) und die zusätzliche Verbindungsschicht (L') perforiert sind, um die Diffusion von Flüssigkeiten aus den Nahrungsmitteln zur absorbierenden Schicht (A1) zu ermöglichen.

19. Verpackung nach Anspruch 18, bei welcher das Polyolefin Polyethylen ist.
